Europäisches Patentamt

European Patent Office

Office européen des brevets

(11) Publication number: **0 188 877**
**A1**

(12) **EUROPEAN PATENT APPLICATION**

(21) Application number: **85308405.1**

(22) Date of filing: **19.11.85**

(51) Int. Cl.⁴: **H 02 K 3/34**, H 02 K 3/32

(30) Priority: **14.12.84 US 681645**

(43) Date of publication of application: **30.07.86**
**Bulletin 86/31**

(84) Designated Contracting States: **DE FR GB**

(71) Applicant: **GENERAL MOTORS CORPORATION,**
**General Motors Building 3044 West Grand Boulevard,**
**Detroit Michigan 48202 (US)**

(72) Inventor: **Gold, Lowell Charles, 1106 Whitmore Street,**
**Anderson Indiana 46011 (US)**
Inventor: **Hanshew, Mark Henry, 501 Stoner Drive,**
**Anderson Indiana 46013 (US)**

(74) Representative: **Denton, Michael John et al, Patent**
**Section - Luton Office (F6) Vauxhall Motors Limited P.O.**
**Box 3 Kimpton Road, Luton Bedfordshire LU2 0SY (GB)**

(54) **Alternating current generator rotor.**

(57) A rotor for an alternating current generator that includes
a steel rotor core member (22) that carries a field coil (40) sup-
porting spool (32). The core member (32) has axially extending
circumferentially spaced grooves (26) on its outer periphery
that receive axially extending and circumferentially spaced ribs
(38) of the spool. The spool ribs (38) are connected to spool
end flanges (34, 36). A field coil (40) is wound on the spool and
core member. The inner turns of the field coil (40) contact ou-
ter surfaces of the spool ribs (38) and outer surfaces (28) of
the core member (22) located between the spool ribs.

ALTERNATING CURRENT GENERATOR ROTOR

This invention relates to a rotor for an alternating current generator.

Rotors for alternating current generators of the type that have two segments provided with interleaved pole teeth and a core member formed of magnetic material, all carried by a shaft, are well known to those skilled in the art, one example being the rotor disclosed in United States Patent No 3,271,604.

In the rotors of the type shown in this patent, the field coil of the rotor is wound on a spool that is formed of insulating material. The spool has a tubular portion disposed about a metallic rotor core member and has annular end flanges. The field coil for the rotor is wound on the outer surface of the tubular portion of the spool and between the end flanges. With the arrangement that has been described the inner turns of the field coil are spaced from the outer surface or periphery of the rotor core member by the radial thickness of the tubular part of the spool that surrounds the rotor core member.

In contrast to the rotor just described it is an object of this invention to provide a rotor wherein a substantial portion of the inner turns of the field coil directly contact outer surface portions of the metallic rotor core member. With this arrangement improved heat dissipation is provided for heat generated in the field coil since heat is transferred directly to the metallic rotor core member instead of through a layer of spool insulating material.

Another object of this invention is to provide a rotor wherein the field coil supporting spool has end flanges for retaining the field coil and is designed to allow contact between portions of the inner turns of the field coil and the metallic rotor core member.

Still another object of this invention is to provide a rotor wherein the field coil supporting spool and rotor core member are arranged to increase the effective cross-sectional area of the rotor core member as compared to conventional rotors where the inner turns of the field coil are spaced from the outer periphery of the rotor core member by the tubular portion of the spool.

To this end, a rotor for an alternating current generator is characterised by the features specified in the characterising portion of Claim 1.

In a preferred embodiment of this invention, the foregoing objects are achieved by providing a field coil supporting spool of insulating material that has annular end flanges that are joined by axially extending circumferentially spaced ribs. The spool ribs fit into axially extending circumferentially spaced grooves or slots formed in the outer periphery of the rotor core member. The field coil is comprised of insulated copper wire which is wound in the area between the flanges of the spool and the inner turns of the field coil directly engage the outer surfaces of the ribs of the spool and outer surface areas of the rotor core member located between the ribs. The outer periphery of the rotor core member is coated with an insulating paint that serves as an electrical insulator between the inner turns of the field coil and the rotor core member.

This invention is further described, by way of example, with reference to the accompanying drawings, in which:-

Figure 1 is a sectional view of a rotor made in accordance with this invention taken along line 1--1 of Figure 2;

Figure 2 is an end view partly in section of the rotor illustrated in Figure 1 looking in the direction of arrows 2--2; and

Figure 3 is an end view of the rotor core member and field coil assembly of the rotor of this invention illustrating how the ribs of the spool fit into the grooves of the rotor core member and illustrating how the inner turns of the field coil are wound over the spool ribs and into engagement with portions of the outer periphery of the rotor core member located between the ribs.

The rotor of this invention forms the rotor of an alternating current generator and in use the rotor rotates within the stator core of the alternating current generator that carries a three phase stator winding. This type of generator is well known to those skilled in the art, one example being the alternating current generator disclosed in United States Patent No 3,538,362.

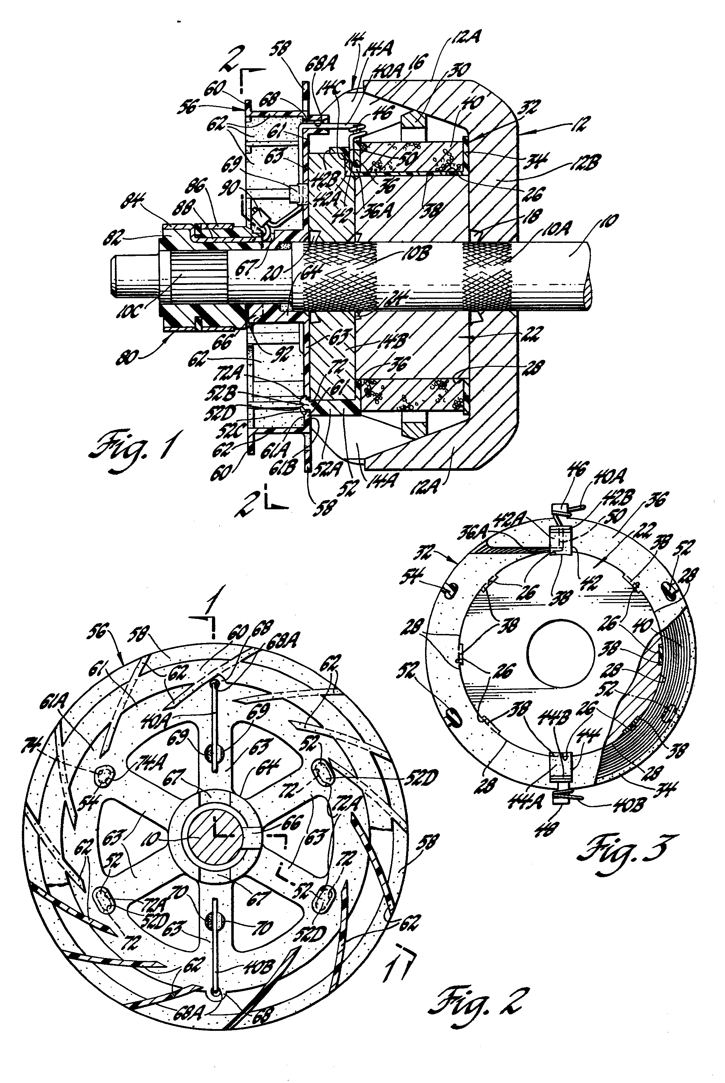

Referring now to the drawings and more particularly to Figure 1, the rotor of this invention comprises a steel shaft 10 which has two helix-diamond knurled portions 10A and 10B and a straight-knurled portion 10C. The rotor has a pair of poles or segments 12 and 14. The segments 12, 14 are formed of a magnetic material such as steel and each segment has a plurality of circumferentially spaced pole teeth (for example six pole teeth) 12A and 14A respectively. The pole teeth 12A extend from an annular portion 12B which has a central opening that receives the steel shaft 10. The pole teeth 14A extend from an annular portion 14B which also has a central opening that receives the steel shaft 10. The pole teeth 12A, 14A of each segment 12, 14 are separated by gaps, one of which is designated by reference numeral 16. The pole teeth 12A, 14A of the two segments 12, 14 are interleaved, that is the pole teeth of a segment are located in the gaps 16 between the pole teeth of the other segment. The configuration of the pole teeth 12A, 14A and how they are interleaved is well known to those skilled in the art and is disclosed in the above-referenced US Patent No 3,271,604. The segments 12 and 14 are secured to the steel shaft 10 by staked portions 18,20 respectively of the segments which grip the helix-diamond knurled portions 10A and 10B of the steel shaft 10.

The rotor has a cylindrical core member 22 which is formed of a magnetic material, such as steel. The end faces of the cylindrical core member 22 engage the inner faces of the annular portions 12B and 14B of the segments 12 and 14. The cylindrical core member 22 has a central opening that receives the steel shaft 10 and is secured to the steel shaft 10 by staked portion 24 thereof which grips a portion of the helix-diamond knurled portion 10B of the steel shaft 10.

The cylindrical core member 22 has eight longitudinally extending grooves or slots 26, which are located at the outer periphery of the cylindrical core member 22 and which extend for the entire length of the cylindrical core member 22. Located between the longitudinally extending slots 26 are outer arcuately extending surfaces 28 of the outer periphery of the cylindrical core member 22. The entire outer periphery or surface of the cylindrical core member 22, including the surfaces of the longitudinally extending slots 26 but excluding the end faces, has a thin paint coating of electrical insulating material which has not been illustrated. One type of insulating paint that may be used to coat the cylindrical core member 22 is a two-part epoxy wet paint that can be sprayed onto the cylindrical core member. The paint or coating may be prepared by mixing an epoxy resin and a hardener. By way of example, the resin may be a type 109-C-38 resin and the hardener a type 109-L-60 blue hardener, both of which are designations of and supplied by Lilly Industrial Coatings Inc., Indianapolis, Indiana. After being applied to the cylindrical core member 22 the paint or coating is cured or sets-up to provide a thin solid coat of insulation over the outer periphery of the rotor core. The paint or insulating coating preferably has a thickness of about 0.04 to 0.07 mm.

The rotor has an annular ring 30 formed of a nonmagmetic material, such as aluminium, which tightly engages inner surfaces of the pole teeth 12A and 14A.

The rotor of this invention has a field coil supporting spool 32 that is formed of a moulded electrical insulating material (fibre filled nylon). The field coil supporting spool 32 has annular end flanges 34 and 36 and has eight axially extending ribs or struts 38 which connect or join the annular end flanges 34 and 36. The axially extending ribs 38 are located within the longitudinally extending slots 26 formed in the cylindrical core member 22 as is illustrated in Figure 3.

The field coil supporting spool 32 carries a field coil 40 which is comprised of a number of turns of insulated copper wire. The inner turns of the copper wire of the field coil 40, are wound directly against the outer surfaces of the axially extending ribs 38 and against the outer arcuately extending surfaces 28 of the cylindrical core member 22. It can be seen, from Figure 3, that the annular end flange 36 has a slot 36A. The annular end flange 36 also carries a pair of L-shaped lugs 42 and 44 and has a pair of radially extending posts 46 and 48. The L-shaped lugs 42 and 44 are comprised respectively of portions 42A and 42B and 44A and 44B. When the field coil 40 is wound on the field coil supporting spool 32 and the cylindrical core member 22, the field coil supporting spool is first fitted to the cylindrical core member 22 by sliding the axially extending ribs 38 into the longitudinally extending slots 26 of the cylindrical core member 22. In order to start the winding of the field coil 40, a conductor end 40A is wound around the radially extending post 46 and then passed through a slot 50, located behind the L-shaped lug 42, and then through the slot 36A into the area between the annular end flanges 34 and 36 whereby the wire is in position to form the first inner turn of the field coil. The field coil 40 is then wound in the space between the annular end flanges 34 and 36 with the inner turns of the field coil directly engaging the outer surfaces of axially extending ribs 38 and outer arcuately extending surfaces 28 of the cylindrical core member 22. The finish lead 40B of the field coil 40 is wrapped around the radially extending post 48. The end portions of the field coil 40 engage inner surfaces of the annular end flanges 34 and 36 and these annular end flanges retain the field coil 40 in the winding space between.

The field coil supporting spool 32 has four axially extending posts, three of which are designated by reference numeral 52 and one of which is designated by reference numeral 54. These posts 52, 54 are integral parts of the field coil supporting spool 32 and extend axially from the annular end flange 36 of the field coil supporting spool 32. The posts 52 are of identical size and shape whereas the post 54 has a slightly different size and shape. These posts 52, 54 extend axially through the gaps 16 between the pole teeth 14A of the segment 14 and are ultrasonically welded to a generator cooling fan 56.

The generator cooling fan 56 is a one-piece, plastic moulded part which may be formed, for example from a nylon moulding material. The generator cooling fan 56 has a pair of axially spaced annular portions 58 and 60 and an annular portion 61 all of which are joined or connected by fan blades 62. The generator cooling fan 56 has a hub portion 64 which is connected to annular portion 61 by radially extending spokes 63. The hub portion 64 is press-fitted to the steel shaft 10 and has an axially extending lug 66 and a pair of diametrically opposed slots 67. The generator cooling fan 56 has a pair of cylindrical portions 68 each of which has a hole or opening 68A which respectively receive the conductor end 40A and the finish lead 40B of the field coil 40. The generator cooling fan 56 further has pairs of integral conductor retaining ears 69 and 70 which receive the conductor end 40A and the finish lead 40B respectively of the field coil 40. These integral conductor retaining ears 69, 70 are slightly resilient so that the conductor can be pressed into the gap between them. The diameter of the conductor is slightly larger than the gap between the integral conductor retaining ears 69, 70 so that when the conductor is pressed into the gap the integral conductor retaining ears spread apart slightly and then tightly grip the conductor to hold it in place.

The generator cooling fan 56 has three oblong shaped holes 72 which extend through the annular portion 61 and which are each bounded by a recess 72A formed in a surface 61A of the annular portion 61. The oblong shaped holes 72 are adapted to respectively receive the ends of the posts 52 on the field coil supporting spool 32. The generator cooling fan 56 has another hole 74 bounded by a recess 74A. The hole 74 and recess 74A are of a slightly different shape than the oblong shaped holes 72. The hole 74 receives the end of the post 54.

When the generator cooling fan 56 is assembled it is pressfitted to the steel shaft 10 and is moved toward the end of field coil supporting spool 32 such that the ends of posts 52 slide through the oblong shaped holes 72 and the end of post 54 slides through the hole 74. Due to the fact that posts 52 have a different shape than post 54 the generator cooling fan 56 can only have one correct rotary orientation when it is assembled to the posts. The posts 52 each have a portion 52A which is of larger cross section than a portion 52B which slides through one of the oblong shaped holes 72. The difference in the cross-sectional areas defines a ledge or face 52C which engages a surface 61B of the annular portion 61 when the portions 52B of the posts 52 slide through the oblong shaped holes 72 in the generator cooling fan 56. The end of post 52 is then hot upset by an ultrasonic welding operation so that the ends of the portions 52B are headed over and moved into engagement with the surface 61A. This hot upset or headed over portion has been indicated by reference numeral 52D. When the end of portion 52B is hot upset the material of that portion flows into the recess 72A. In the final hot upset condition, the annular portion 61 of the generating cooling fan 56 is clamped between the headed over portion 52D and the ledge or face 52C of the post 52. Prior to the ultrasonic hot upset operation, the end of the portion 52B of the post 52 extends slightly beyond the surface 61A of the annular portion 61. The end of the post 54 is secured to the annular portion 61 of the generator cooling fan 56 in the same manner as the hot upsetting of the posts 52 to the annular portion 61.

The rotor of this invention includes a slip ring assembly 80. The slip ring assembly 80 comprises a bored insulator 82 which is secured to the steel shaft 10 by forcing the bored insulator over the straight knurled portion 10C of the steel shaft 10. The straight knurls bite into the bored insulator 82 to thereby secure it to the steel shaft 10. The bored insulator 82 carries a pair of annular copper slip rings 84 and 86, each of which has an integral axially extending conductor 88. The annular copper slip rings 84, 86 and their integral axially extending conductors 88 are moulded to the bored insulator 82. The integral axially extending conductor 88 of the annular copper slip ring 84 is connected to the conductor end 40A of field coil 40 by fitting the conductor end and the end of the integral axially extending conductor 88 into a metallic clip 90 and then crimping and subsequently

0188877

welding the metallic clip to the conductors.  The extreme end portion of conductor end 40A is bared of insulation prior to being inserted into the metallic clip 90.  The annular copper slip ring 86 is connected to the finish lead 40B of the field coil 40 in the same manner.  This connection is not illustrated in the drawings.

In assembling the rotor of this invention the segment 12 is fitted to the steel shaft 10 and is staked thereto by staked portion 18.  A coil winding assembly, which is illustrated in Figure 3 and which comprises the cylindrical core member 22, the field coil supporting spool 32 and the field coil 40, is then assembled to the steel shaft 10 such that one end of the cylindrical core member 22 engages an inner surface of the annular portion 12B of the segment 12.  In assembling the field coil assembly of Figure 3 to the steel shaft 10 an axially extending lug (not illustrated), formed on the outer face of the annular end flange 34, is positioned within a recess (not illustrated) formed on the inner surface of the annular portion 12B of the segment 12.  This provides proper rotary orientation for the cylindrical core member 22 and the field coil supporting spool 32.  The cylindrical core member 22 is then staked at the staked portion 24 to secure the cylindrical core member to the helix-diamond knurled portion 10B of the steel shaft 10.  The segment 14 is now assembled to the steel shaft 10 and is staked to the helix-diamond knurled portion 10B by the staked portion 20.  The segment 14 has a pair of diametrically opposed radially extending slots 14C which receive the portions 42A and 44A of the L-shaped lugs 42 and 44 of the field coil supporting spool 32 when the segment 14 is moved against the cylindrical core member 22. This provides proper rotary orientation for segment 14.

With the parts assembled, as has been described, the generator cooling fan 56 is press-fitted to the steel shaft 10 and as the generator cooling fan 56 is moved into engagement with the segment 14 the posts 52 and 54 pass through the respective oblong shaped holes 72 and hole 74 formed in the generator cooling fan and the ends of the posts are then hot upset in a manner that has been described. When the generator cooling fan 56 is assembled, as has been described, the conductor end 40A and the finish lead 40B of the field coil 40 are passed through the holes 68A of the generator cooling fan. The conductor end 40A and the finish lead 40B are then forced into the integral conductor retaining ears 69 and 70 respectively so that they are in a position where the insulation bared ends of the conductor end and the finish lead can be placed in the metallic clips 90.

With the rotor assembled, as has been described, the slip ring assembly 80 is then slipped onto the steel shaft 10 and moved so that the end surface of the bored insulator 82 engages the end of the hub portion 64 of the generator cooling fan 56. The bored insulator 82, of the slip ring assembly 80, has a radially extending slot 92 which receives the axially extending lug 66 of the generator cooling fan 56. This provides proper rotary orientation for slip ring assembly 80. When the slip ring assembly 80 has been assembled to the steel shaft 10, the end of the integral axially extending conductor 88 of the annular copper slip ring 84 and the conductor end 40A of the field coil 40 are located in the metallic clip 90 which is crimped and subsequently welded to the integral axially extending conductor 88 and to the conductor end 40A. The connection between the annular copper slip ring 86 and the finish lead 40B of the field coil 40 is made in the same manner.

After the rotor has been assembled, as has been described, it is dipped in varnish to impregnate the rotor in a manner that is well known to those skilled in the art. The varnish, due to wicking, flows to some extent into areas between inner surfaces of the radially extending spokes 63 and an outer surface of the annular portion 14B of the segment 14 and between any inner surface portions of the annular portion 61 that overlap the outer surface of the annular portion 14B. When this varnish has dried, it bonds the generator cooling fan 56 to the segment 14.

The generator cooling fan 56 is nonrotatably secured to the steel shaft 10 by the varnish bonding of the generator cooling fan to the segment 14; by the axially extending lug 66 of the generator cooling fan which fits into the radially extending slot 92 of the slip ring assembly 80; by the press fit of the generator cooling fan to the steel shaft 10; and to some extent by posts 52 and 54 that connect the field coil supporting spool 32 and the generator cooling fan.

The thin insulating coating on the copper wire that is used to wind the field coil 40 has sufficient break down voltage so that it could be wound directly onto a cylindrical core member 22 that did not have a coating of insulating material, without fear of an electrical break down between the copper wire and the core. However, during the winding or handling of the wire of the field coil 40 it is possible for the insulation on the copper wire to be nicked or punctured and if this should happen the insulating paint coating on the cylindrical core member 22 would prevent a short circuit between the copper wire of the field coil 40 and the cylindrical core member 22. If it could be assured that the coating of the insulation on the copper wire of the field coil 40 was always uniform and always remained intact, when being handled or when being wound on the cylindrical core member 22, the coating of insulating material on the cylindrical core member would not be required and in such a case the insulated copper wire could be wound directly on the bare metal of the cylindrical core member.

Since the generator cooling fan 56 is formed of electrical insulating material it serves both as a fan and as an insulator for insulating the ends of the field coil 40 that are connected to the annular copper slip rings 84, 86 from the segment 14.

When the field coil 40 is tightly wound against the outer arcuately extending surfaces 28 of the cylindrical core member 22 and against the outer surfaces of the axially extending ribs 38 of the field coil supporting spool 32, the inner surfaces of the axially extending ribs are forced into tight engagement with inner surfaces of the longitudinally extending slots 26. The radial dimension of the longitudinally extending slots 26 and the axially extending ribs 38 are such that the outer surfaces of the axially extending ribs 38 are flush with or extend slightly beyond the outer arcuately extending surfaces 28 of the cylindrical core member 22 after the field coil 40 has been wound. This reduces the possibility of fracturing or puncturing the insulation on the copper wire of the field coil 40 when it is wound, as described. The frictional engagement between the inner surfaces of the axially extending ribs 38 and inner surfaces of the longitudinally extending slots 26, and the fact that the axially extending ribs 38 are located in the longitudinally extending slots 26, prevents any relative rotation between the cylindrical core member 22 and the field coil supporting spool 32.

The relative dimensions of the outer surfaces of the axially extending ribs 38 and outer arcuately extending surfaces 28 of the cylindrical core member 22 are such that about 75% of the outer surface area of the cylindrical core member 22 is contacted by the inner turns of the field coil 40. The surface area of the cylindrical core member 22, that is contacted by the inner turns of the field coil 40, is made as large as possible consistent with providing sufficient material for the axially extending ribs 38 that connect the annular end flanges 34 and 36. The axially extending ribs 38 must be of sufficient strength as to properly support the annular end flanges 34 and 36 and the field coil 40 wound thereon.

The coating of insulating material on the cylindrical core member 22 can take forms other than the two part epoxy paint that has been described. For example, a coating of insulating material could be applied to the cylindrical core member 22 by a so-called fluidized bed method wherein a heated metallic core part is placed in a cloud of suspended coating particles. The particles melt when they contact the cylindrical core member 22 to provide a coating of insulating material thereon. This method is described in the United States Patent No 2,997,776 and in the United States Patent No 3,076,110. In general, the insulating material that coats the cylindrical core member 22 should be as thin as possible so as to provide a good heat transfer path to the cylindrical core member 22 and still be capable of providing sufficient electrical insulation between the inner turns of the field coil 40 and the cylindrical core member 22.

The following is a summary of some of the advantages of a rotor made in accordance with this invention.

(1) Since substantial portions of the inner turns of the field coil are in direct contact with the metallic rotor core member there is improved heat transfer to the rotor core member for heat generated in the field coil.

(2) The use of ribs on the field coil supporting spool, that fit into grooves in the rotor core member, allows portions of the inner turns of the field coil to directly contact the rotor core member and these ribs also serve as a supporting means for the end flanges of the spool.

(3) As compared to a spool and core member arrangement wherein a tubular portion of the spool entirely surrounds the cylindrical core, the spool and core member arrangement of this invention has a larger cross-sectional area of magnetic material for a given winding circumference for the inner turns of the field coil. This increase in area corresponds to the arcuately extending end faces of the rotor core member that are located between the grooves. Putting it another way, the space that would be normally occupied by the spool thickness of the portion of a conventional field coil spool that surrounds the core member can provide additional space for extra field coil winding turns and/or more iron on the core diameter of the core member, depending on which is more cost effective.

Claims:-

1. A rotor for an alternating current generator comprising a core member (22) formed of magnetic material; a coil supporting spool (32) formed of electrical insulating material disposed about the core member; and a coil (40) supported by the coil supporting spool and the core member, the coil comprising a winding comprising a plurality of turns of wire disposed about the longitudinal axis of the core member; characterised in that the core member (22) has a plurality of axially extending, circumferentially spaced grooves (26); in that the coil supporting spool (32) has a plurality of axially extending, circumferentially spaced ribs (38) located in the circumferentially spaced grooves; and in that the winding of the coil (40) is disposed with the inner turns thereof engaging the outer surfaces of the circumferentially spaced ribs and the outer surfaces (28) of the core member disposed between the circumferentially spaced ribs.

2. A rotor as claimed in Claim 1, characterised in that the rotor includes a shaft (10) carrying a pair of rotor segments (12,14) that have interleaved pole teeth (12A,14A), and in that the core member (22) is carried by the shaft and is disposed between the segments.

3. A rotor as claimed in Claim 1 or Claim 2, characterised in that the coil supporting spool (32) has a pair of radially extending end flanges (34,36) with the circumferentially spaced ribs (38) being joined to and extending between the end flanges; the end flanges engaging opposite end portions of the coil (40) to thereby retain the coil between the end flanges.

4. A rotor as claimed in any one of the preceding Claims, characterised in that at least the outer surfaces (28) of the core member (22) disposed between the circumferentially extending ribs (38) are defined by a coating of electrical insulating material adhered to the core member.

5. A rotor as claimed in any one of Claims 2 to 4, characterised in that the core member (22) has end faces respectively engaging the segments (12,14).

6. A flux generating unit for electrical apparatus comprising a core member (22) formed of magnetic material; a coil supporting spool (32) formed of electrical insulating material disposed about the core member; and a coil (40) supported by the coil supporting spool and the core member, the coil comprising a winding comprising a plurality of turns of wire disposed about the longitudinal axis of the core member; characterised in that the core member (22) has a plurality of axially extending, circumferentially spaced grooves (26); in that the coil supporting spool (32) has a plurality of axially extending, circumferentially spaced ribs (38) located in the circumferentially spaced grooves; and in that the winding of the coil (40) is disposed with the inner turns thereof engaging the outer surfaces of the circumferentially spaced ribs and the outer surfaces (28) of the core member disposed between the circumferentially spaced ribs.

Fig. 1

Fig. 2

Fig. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE-B-1 291 012 (MOTOROLA INC.)<br>* column 2, lines 29-57; figure 2 * | 1,2,5 | H 02 K 3/34<br>H 02 K 3/32 |
| | --- | | |
| A | US-A-3 305 740 (C.L. SHANO)<br><br>* column 2, line 64 - column 3, line 45; figures 1, 2 * | 1,2,3,6 | |
| | --- | | |
| A | GB-A-2 016 819 (R. BOSCH GMBH)<br>* abstract, figures 1, 2 * | 1,6 | |
| | --- | | |
| A | GB-A-2 032 199 (HITACHI, LTD.)<br><br>* page 2, line 27 - page 3, line 20; figures 1, 2 * | 1,2,3,5 | |
| | ----- | | TECHNICAL FIELDS SEARCHED (Int. Cl.4)<br><br>H 02 K 3/00<br>H 02 K 19/00<br>H 02 K 1/00 |

The present search report has been drawn up for all claims

| Place of search | Date of completion of the search | Examiner |
|---|---|---|
| BERLIN | 20-03-1986 | WEIHS J.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82